# EUROPEAN PATENT APPLICATION

(11) **EP 2 818 387 A1**
(43) Date of publication of application: **31.12.2014**
(21) Application number: 13752116.7
(22) Date of filing: 04.02.2013
(51) Int. Cl.: B62D 25/08

(54) **STRUCTURE FOR FRONT PART OF VEHICLE**

(30) Priority: 20.02.2012 JP 2012033874
(71) Applicant: Honda Motor Co., Ltd., Minato-ku Tokyo 107-8556 (JP)
(72) Inventor: SASAKI Kazutada, Wako-shi Saitama 351-0193 (JP); NIHEI Hidefumi, Wako-shi Saitama 351-0193 (JP)
(74) Representative: Herzog, Markus
(86) International application number: PCT/JP2013/052452
(87) International publication number: WO 2013/125334

(57) **Abstract**

A structure (100) for a front part of a vehicle includes a pair of air-liquid-separating chambers (8, 8) disposed on both sides in a vehicle-width direction, and to separate air from water having flowed in from the outside of the vehicle; a windshield lower (6) to support a windshield glass (W) from under the windshield glass, and having an extending section (64) extending forward more than an front end (Wa) of the windshield glass (W); and a cowl top (7) supported by the extending section (64), and to cover an opening (95) formed between the extending section (64) and an engine hood (EH) . The cowl top (7) is provided with a first drain section (H1) positioned on a rear end (EHa) side of the engine hood (EH) , extending in the vehicle-width direction, and to drain water having flowed to the cowl top (7) from the engine hood (EH) to the sides of the vehicle.

## Description

### TECHNICAL FIELD

The present invention relates to a structure for a front part of a vehicle.

### BACKGROUND ART

As to a structure for a front part of a vehicle, a structure which has a draining function to prevent water from staying, and also an air-liquid-separating function to separate water from air, is known in the related art (for example, refer to the patent documents 1, 2).

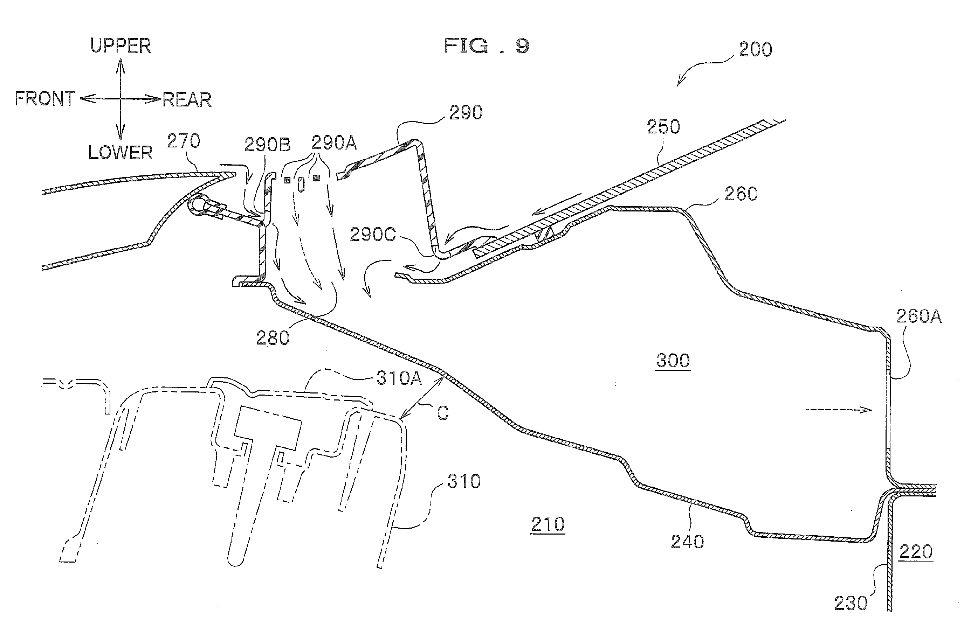

There exists a related structure shown in Figure 9 as an example of such a structure for a front part of a vehicle. Figure 9 is a sectional side view showing a structure 200 for a front part of a vehicle in the related art. Note that, solid line arrows designate water flows, and dashed line arrows designate air flows.

As shown in Figure 9, the related structure 200 for a front part of a vehicle includes a dash upper 240, a windshield lower 260, and a cowl top 290. The dash upper 240 extends forward from an upper end of a dash lower 230 partitioning an engine room 210 and a vehicle compartment 220. The windshield lower 260 supports a windshield glass 250 from under that. The cowl top 290 which is disposed between the windshield glass 250 and an engine hood 270 covers an air-suction port 280 formed between the windshield lower 260 and the dash upper 240. The cowl top 290 has air-suction holes 290A, a front opening 290B, and a rear opening 290C formed therein. The windshield lower 260 has a blower-suction port 260A formed therein to be connected to a blower not shown.

Air led in the cowl top 290 from the outside through the air-suction holes 290A is taken into the blower through the air-suction port 280 and the blower-suction port 260A. On the other hand, water having flowed in the cowl top 290 through the air-suction holes 290A is separated from air taken from the outside in a space 300 defined by the dash upper 240 and the windshield lower 260, and drained to the outside of the vehicle through the sides of the vehicle.

Furthermore, water having flowed to the cowl top 290 from the engine hood 270 or the windshield glass 250 is led in the space 300 through the front opening 290B or the rear opening 290C, and then drained to the outside of the vehicle through the sides of the vehicle.

### PRIOR ART DOCUMENT

### PATENT DOCUMENT

Patent document 1: Unexamined Japanese patent publication No. H05-69858
Patent document 2: Japanese patent publication No. 4104392

### SUMMARY OF THE INVENTION

### PROBLEMS TO BE SOLVED BY THE INVENTION

By the way, in order to improve a field of view in a forward view in the vehicle, it is preferable that the top point (cowl point) of the cowl top 290 is set to be as low as possible. However, in the related structure 200 for the front part of the vehicle, water and air having flowed in through the air-suction holes 290A, the front opening 290B, and the rear opening 290C are separated from each other by utilizing the space 300. Therefore, the flow speed of the water has been needed to be lowered by enlarging the sectional size of the space 300 with use of the dash upper 240 having a large sectional size. Thus, a clearance C between the dash upper 240 and an engine 310 has become small, so that the cowl top 290 has not been able to be largely lowered.

The present invention is created in view of such a background. It is an object of the present invention to provide a structure for a front part of a vehicle capable of separating air and water from each other, and improving a field of view.

### MEANS FOR SOLVING THE PROBLEM

In order to solve the problem, the present invention provides a structure for a front part of a vehicle, comprising:
a pair of air-liquid-separating chambers disposed on both sides in a vehicle-width direction, and to separate air from water having flowed in from the outside of the vehicle;
a windshield lower to support a windshield glass from under the windshield glass, and having an extending section extending forward more than a front end of the windshield glass; and
a cowl top supported by the extending section, and to cover an opening formed between the extending section and an engine hood,
wherein the cowl top is provided with a first drain section positioned on a rear end side of the engine hood, extending in the vehicle-width direction, and to drain water having flowed to the cowl top from the engine hood to the sides of the vehicle.

According to the present invention, air and water having flowed in from the outside of the vehicle can be separated from each other by the pair of air-liquid-separating chambers disposed on both sides in the vehicle-width direction, and furthermore, by the first drain section which is provided in the cowl top, positioned on a rear end side of the engine hood, and extends in the vehicle-width direction, water having flowed to the cowl top from the engine hood can be drained to the sides of the vehicle, so that water can be restrained from staying on or in the cowl top. Consequently, the space with a large sectional area having the air-liquid-separating function and the draining function is not needed on the intermediate side in the vehicle-width direction, so that the dash upper having a large sectional size can be omitted. Hereby, a space where the windshield lower, the cowl top, the windshield glass, and the engine hood can be lowered can be produced in the area over the engine. Consequently, a field of view in a forward view in the vehicle can be improved.

And it is preferable that the windshield lower further has a protruding section provided on an intermediate portion of the extending section in a front-rear direction, and protruding upward; and a second drain section is provided between the protruding section of the windshield lower and the cowl top, the second drain section being positioned on the front end side of the windshield glass, and extending in the vehicle-width direction to drain water having flowed to the cowl top from the windshield glass toward the sides of the vehicle.

In general, if water having flowed to the cowl top stays there, the water is scraped out by wipers, and then the scraped water is re-adhered to the windshield glass, so that an evil that the field of view in a forward view in the vehicle turns worse occurs.

Because of this, according to the present invention, the windshield lower has a protruding section provided on an intermediate portion of the extending section in a front-rear direction, and protruding upward, and a second drain section is provided between the protruding section of the windshield lower and the cowl top, the second drain section being positioned on the front end side of the windshield glass, and extending in the vehicle-width direction, so that water having flowed to the cowl top from the windshield glass can be drained toward the sides of the vehicle to restrain the water from staying on or in the cowl top. Hereby, the water can be prevented from re-adhering to the windshield glass. Consequently, the field of view in a forward view in the vehicle can be properly secured.

Furthermore, it is preferable that both side end portions of the second drain section and the first drain section in the vehicle-width direction communicate with the pair of air-liquid-separating chambers; the structure for the front part of the vehicle further comprises a pair of damper bases and a cross member, the pair of damper bases being disposed on the both sides in the vehicle-width direction to support dampers, and having upper surface sections to form bottom surfaces of the air-liquid-separating chambers, the cross member extending in the vehicle-width direction and being disposed behind the damper bases with spaces; a third drain section to drain water toward the sides of the vehicle is provided between the damper bases and the cross member; and the upper surface sections incline so as to be positioned at lower positions as the upper surface sections approach the third drain section.

According to this constitution, since both side end portions of the second drain section and the first drain section in the vehicle-width direction communicate with the pair of air-liquid-separating chambers, water having flowed through the first drain section and the second drain section flows into the air-liquid-separating chambers.

And upper surface sections of the damper base form bottom surfaces of the air-liquid-separating chambers, and a third drain section to drain water toward the sides of the vehicle is provided between the damper bases and the cross member. Therefore, after water having flowed in the air-liquid-separating chambers is led to the third drain section along the upper surface sections of the damper base, the water is drained to the sides of the vehicle. At this time, the upper surface sections incline so as to be positioned at lower positions as the upper surface sections approach the third drain section, so that water flowing on the upper surface sections is easily led to the third drain section because of its self-weight. Therefore, a rapid draining can be realized.

Furthermore, it is preferable that the cowl top has a cowl top body extending in the vehicle-width direction, and being disposed above the damper bases with spaces to form upper surfaces of the air-liquid-separating chambers; leg sections extending downward from ends of the cowl top body in the vehicle-width direction, and being supported by front ends of the damper bases; and maintenance openings formed in the leg sections, and to communicate the insides and the outsides of the air-liquid-separating chambers, and
maintenance lids to close the maintenance openings are detachably attached to the cowl top, and the maintenance lids have cover sections to cover the upper surface sections.

According to this constitution, since maintenance lids to close the maintenance openings have cover sections and the cover sections cover the upper surface sections of the damper bases, water can be restrained from staying on the upper surface sections of the damper bases and the dampers, and dust, dirt, and/or the like flowed in along with the water can be also restrained from staying there.

Furthermore, the cover sections are integrated with the maintenance lids, so that at the same time when the maintenance lid is removed from the maintenance opening, the cover section is exposed to the outside of the air-liquid-separating chamber. Therefore, dust, dirt, and/or the like adhered onto the cover section 75a can easily removed.

Furthermore, since the cover sections are integrated with the maintenance lids, the number of parts, cost, and assembly man-hour can be reduced, compared to the case where another member to cover the upper surface section of the damper base is prepared.

Furthermore, it is preferable that the structure for the front part of the vehicle further comprises damper base supports connecting the cross member and the damper bases, the damper base supports have vertical wall sections positioned under the windshield lower, and extending in an upper-lower direction to form inside surfaces of the air-liquid-separating chambers in the vehicle-width direction, and flexible seal members are disposed between the vertical wall sections and the windshield lower.

According to this constitution, since flexible seal members are disposed between the vertical wall sections to form inside surfaces of the air-liquid-separating chambers in the vehicle-width direction and the windshield lower, a heat-insulating function can be compatible with a shock-absorbing function, the former function is a function for insulating a heat transfer to the air-liquid-separating chamber from the engine room E, and the latter function is a function for absorbing a shock from above.

### EFFECT OF THE INVENTION

According to the present invention, a structure for a front part of a vehicle capable of separating air and water from each other, and improving a field of view can be provided.

### BRIEF DESCRIPTION OF THE DRAWINGS

FIG. 1 is a schematic whole perspective view of a structure for a front part of a vehicle according to an embodiment of the present invention;
FIG. 2 is a sectional view taken along the line I - I in FIG. 1;
FIG. 3 is an enlarged partial and sectional view of FIG. 2;
FIG. 4 is an enlarged partial broken perspective view viewed in the direction of the arrow X in FIG. 1;
FIG. 5A is an enlarged perspective view viewed in the direction of the arrow Y in FIG. 1;
FIG. 5B is a sectional view taken along the line III - III in FIG. 5A;
FIG. 6 is a sectional view taken along the line II - II in FIG. 1; ,
FIG. 7 is a sectional view taken along the line IV - IV in FIG. 5A;
FIG. 8 is a partial broken perspective view schematically showing a state of draining water through the sides of the structure for the front part of the vehicle; and
FIG. 9 is a sectional side view of a structure for a front part of a vehicle in a related art.

### MODE FOR CARRYING OUT THE INVENTION

An embodiment of the present invention will be described in detail with reference to the attached drawings. The same symbol is given to the same element in the description, and the duplicated description is omitted.

Furthermore, directions needed in this description are described by setting "front", "rear", "left", "right", "upper", and "lower" of a vehicle V to be references. Note that, "vehicle-width direction" is the same direction as "left-right direction".

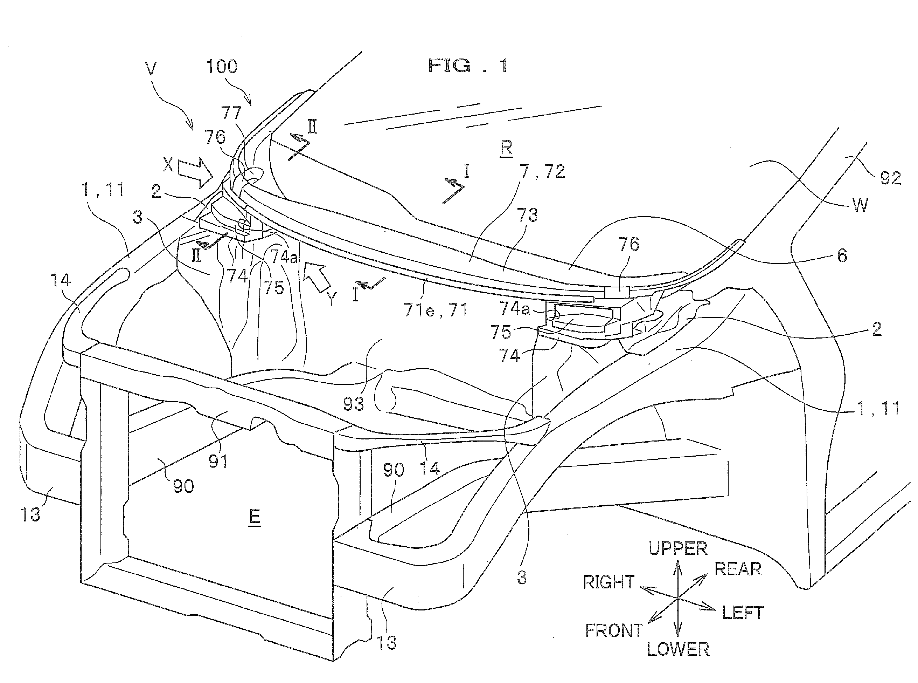

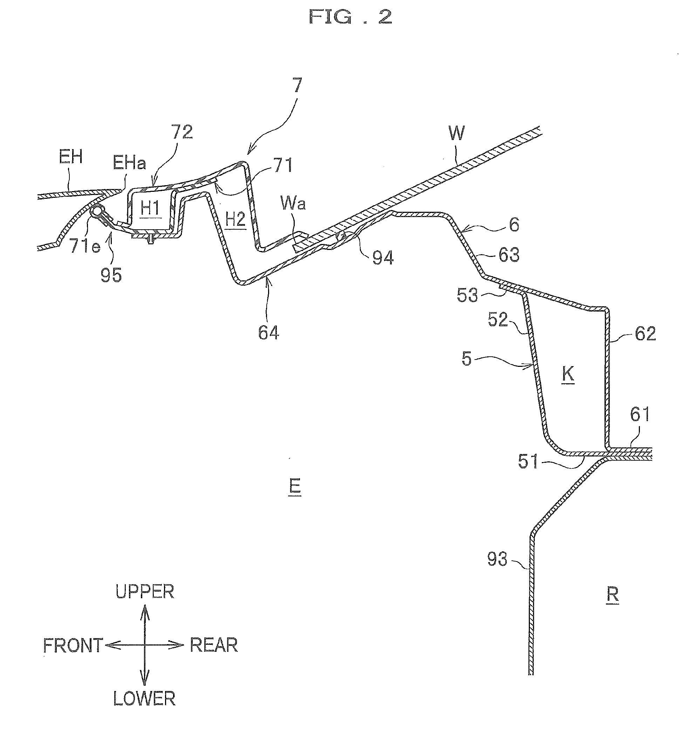

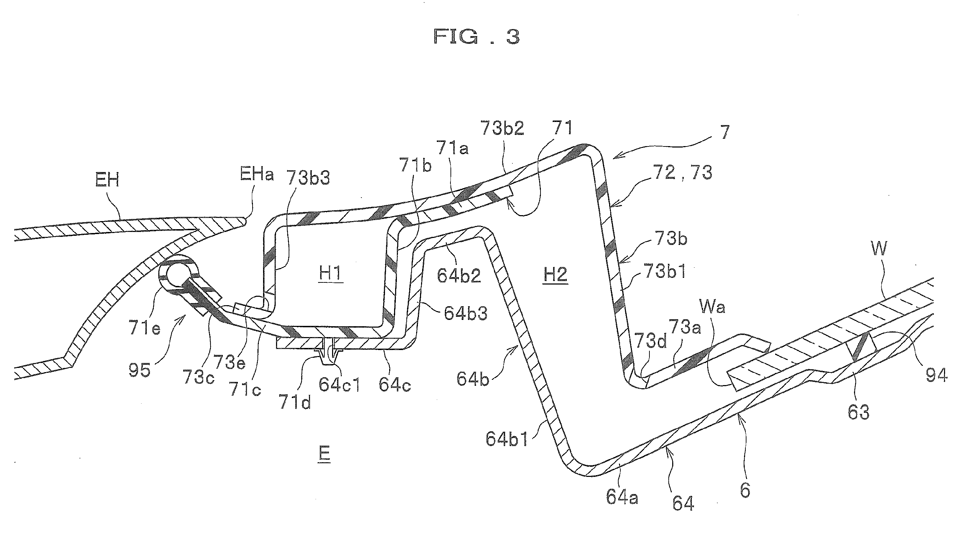

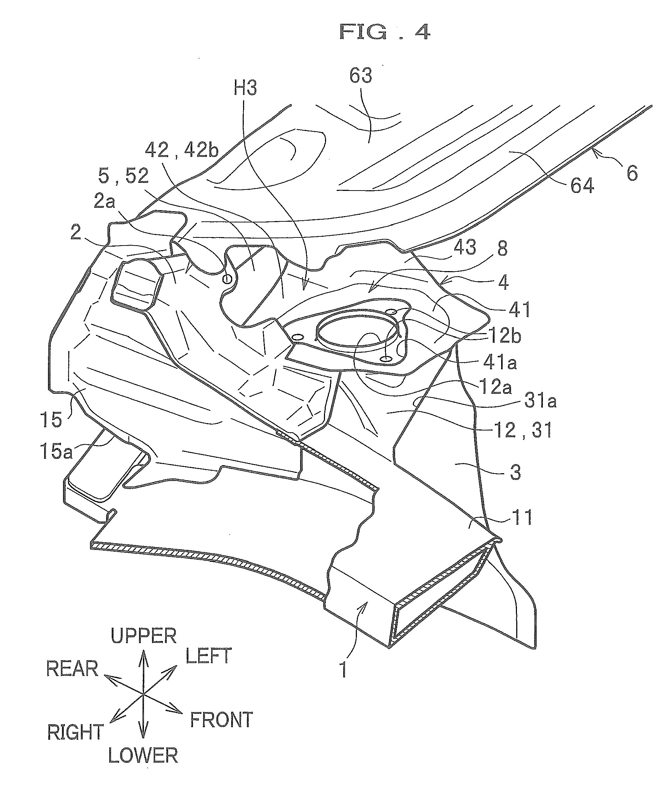

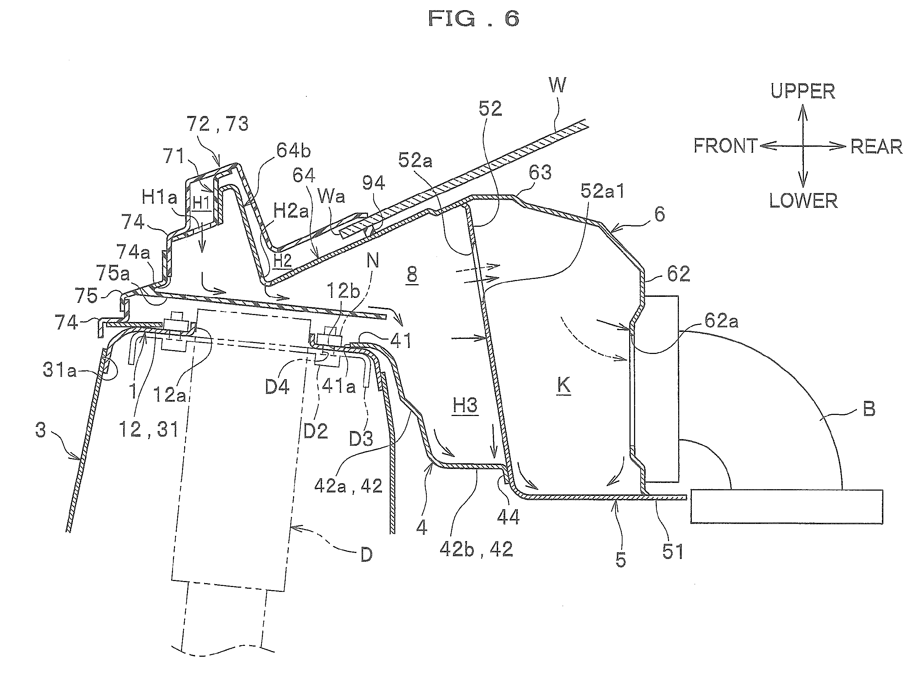

As shown in Figures 1 to 4, a structure 100 for a front part of a vehicle according to the embodiment of the present invention mainly includes upper members 1, 1, side members 2, 2, damper bases 3, 3, damper base supports 4, 4 (refer to Figure 4), a cross member 5 (refer to Figure 2), a windshield lower 6, and a cowl top 7. Furthermore, the structure 100 for the front part of the vehicle includes air-liquid-separating chambers 8, 8 (refer to Figures 4, 6) to separate water and air having flowed in from the outside of the vehicle V, and a second drain section H2 and a first drain section H1 (refer to Figure 3) to lead the water having flowed therein from an engine hood EH and/or a windshield glass W to the air-liquid-separating chambers 8. Note that, the engine hood EH is not shown in Figure 1 as a matter of convenience for the explanation.

### <Upper member>

The upper member 1 is disposed on each of the left and the right sides of the vehicle V as shown in Figure 1, and is a steel member extending in a front-rear direction. The upper member 1 has a body section 11 and a fixing section 12 as shown in Figure 4. A side extension 15 is disposed in the body section 11. The fixing section 12 extends toward the damper base 3 from the inside of a rearward portion of the body section 11 in a vehicle-width direction, and is fixed to an upper end of the damper base 3. A notched portion 15a is formed in the rear end lower section of the side extension 15.

As shown in Figure 1, a front side frame 90 is disposed slantingly below the body section 11, and extends in the front-rear direction, and a front end side of the body section 11 is fixed to the front side frame 90 through a connecting section 13 . Furthermore, the front end side of the body section 11 is fixed to a front bulkhead 91 being a frame body having a roughly rectangular form through a connecting section 14. A rear end side of the body section 11 is fixed to a front end of a front pillar 92 through the side extension 15 (refer to Figures 1 and 4).

A portion (the front end side) of the fixing section 12 is exposed through a hole 41a having a roughly triangular form formed in the damper base support 4 to be described later as shown in Figure 4. A hole 12a in which an upper section of a damper D (refer to Figure 6) is fitted, and bolt holes 12b in which bolts D2 to fix the damper D are inserted are formed through that exposed portion.

### <Side member>

The side member 2 is disposed on each of the left and the right sides of the vehicle V, and is a steel member as shown in Figure 1. As shown in Figure 4, a front end side of the side member 2 is fixed to the body section 11 and the fixing section 12 of the upper member 1, and a rear end side is fixed to an upper end of the side extension 15. A wiper-pivot hole 2a in which a wiper not shown is attached is formed through the rear end side of the side member 2 in an upper-lower direction.

### <Damper base>

The damper base 3 is, as shown in Figure 1, disposed on each of the left and the right sides of the vehicle V, and is a steel member to accommodate and support the damper D. The damper member 3 is disposed on the rear end side and inside of the upper member 1 in the vehicle-width direction. An outside of the upper end of the damper base 3 is fixed to the inside of the body section 11 of the upper member 1 in the vehicle-width direction, and the lower end is fixed to the front side frame 90. A hole 31a is formed, as shown in Figure 4, through the damper base 3 in the upper-lower direction, and the fixing section 12 of the upper member 1 is disposed to cover that hole 31a from the upper side. In this embodiment, the fixing section 12 of the upper member 1 forms an upper surface section 31 of the damper base 3.

As shown in Figure 6, a damper-attaching bracket D3 is provided on the upper section of the damper D, and bolt holes D4 to insert bolts D2 therein are formed through the damper-attaching bracket D3 in the upper-lower direction. The damper D is fixed to the damper base 3 through the fixing section 12 of the upper member 1.

Note that, fixing of the damper D to the damper base 3 is done by screwing a nut N to a bolt D2 inserted in a bolt hole D4 of the damper D and a bolt hole 12b of the upper member 1.

### <Damper base support>

As shown in Figure 4, the damper base support 4 is disposed on each of the left and the right sides of the vehicle V, and is a steel member to connect the damper base 3 and the cross member 5 . The damper base support 4 has a fixing section 41, a lateral wall section 42, and a vertical wall section 43.

The fixing section 41 is a section to be fixed to the upper surface section 31 of the damper base 3 as shown in Figure 4. A hole 41a is formed through the fixing section 41 in the upper-lower direction, through which hole a portion of the fixing section 12 of the upper member 1 is exposed.

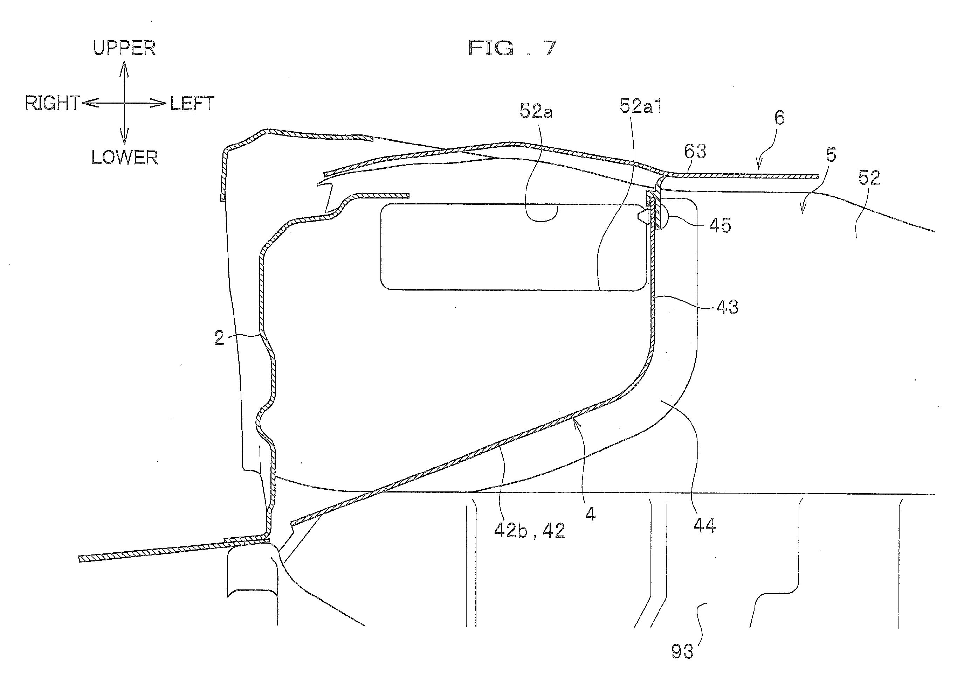

The lateral wall section 42 extends, as shown in Figure 6, downward and rearward from the rear end of the fixing section 41, and is a section to be fixed to a vertical wall section 52 of the cross member 5 to be described later. The lateral wall section 42 is disposed behind the damper base 3. The lateral wall section 42 is formed of a slant section 42a and a bottom wall section 42b. The slant section 42a extends slantingly so as to be positioned at a lower position as a point on the slant section goes rearward from the rear end of the fixing section 41, and the bottom wall section 42b extends rearward from the rear end of the slant section 42a, and is fixed to the cross section 5. Furthermore, the bottom wall section 42b inclines so as to be positioned at a lower position as a point on the bottom wall section goes outward in the vehicle-width direction as shown in Figure 7.

In this embodiment, as shown in Figure 6, a third drain section H3 having a form of a recessed groove in the vertical sectional view is formed of the slant section 42a, the bottom wall section 42b, and the vertical wall section 52 of the cross member 5, and extends in the left-right direction. The third drain section H3 has a roll to drain water having flowed in from the outside of the vehicle V toward the sides of the vehicle.

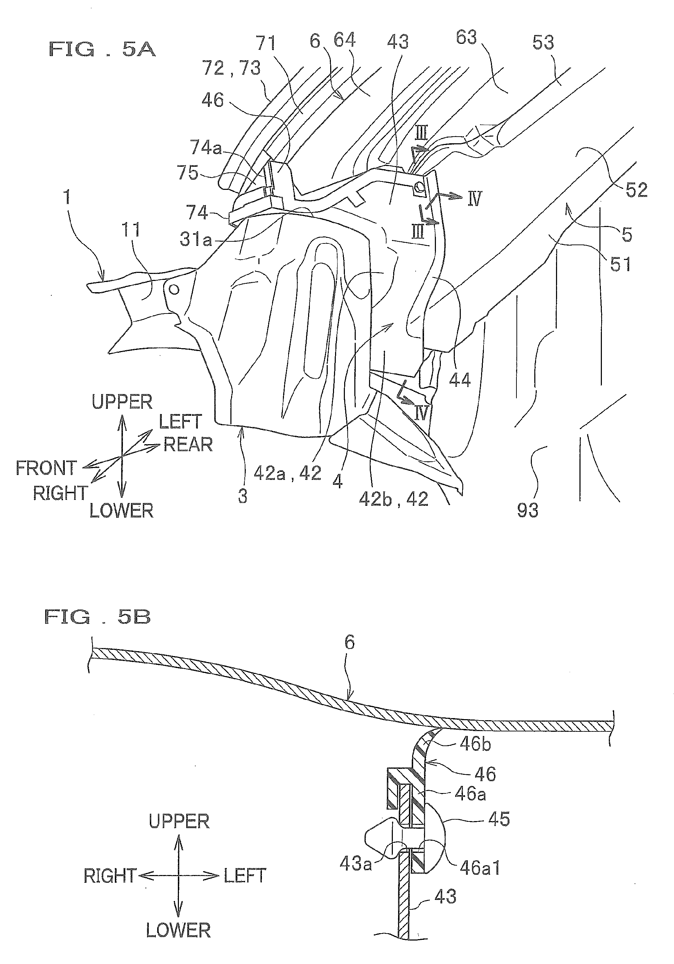

As shown in Figures 4 and 5A, the vertical wall section 43 extends upward and rearward from the inside of the fixing section 41 in the vehicle-width direction, and is a section to be fixed to the vertical wall section 52 of the cross member 5. The vertical wall section 43 is formed so as to be continuous with the inside of the lateral wall section 42 in the vehicle-width direction, and closes the inside of the third drain section H3 in the vehicle-width direction. That is, the vertical wall section 43 functions as a water-stopping section to prevent water having flowed in the third drain section H3 from flowing into the inside of the vehicle in the vehicle-width direction. A flange section 44 to be fixed to the cross member 5 is formed at rear ends of the bottom wall section 42b and the vertical wall section 43 and extends as shown in Figures 5A and 7. The flange section 44 extends from the upper end of the vertical wall section 43 over to the vicinity of the right end of the bottom wall section 42b in directions (the upper-lower direction and the left-right direction) orthogonal to the bottom wall section 42b and the vertical wall section 43.

Furthermore, holes 43a through which engagement clips 45 are inserted are formed through the vertical wall section 43 in the left-right direction as shown in Figure 5B. A seal member 46 is disposed at the upper end portion of the vertical wall section 43, and seals a space between the vertical wall section 43 and the windshield lower 6. The seal member 46 is made of, for example, a material having flexibility like rubber. The seal member 46 is fitted onto the upper end portion of the vertical wall section 43 , and formed of a base section 46a and a seal section 46b. The base section 46a has holes 46a1 through which the engagement clips 45 are inserted, and the holes 46a1 are formed through the base section 46a in the left-right direction. The seal section 46b extends upward from the upper end of the base section 46a to be pressed against the windshield lower 6. The seal member 46 is fixed to the vertical wall section 43 by engaging the engagement clips 45 in the holes 46a1 and the holes 43a of the vertical wall section 43.

### <Cross member>

The cross member 5 is a steel member extending in the vehicle-width direction. As shown in Figure 2, the cross member 5 is fixed on the base end side (rear end side) of the windshield lower 6, and forms a closed cross section K together with the windshield lower 6.

The cross member 5 has a lower flange section 51, the vertical wall section 52, and an upper flange section 53. The lower flange section 51 extends in the front-rear direction and is fixed to an upper end of a dash lower 93. The vertical wall section 52 extends upward from the front end of the lower flange section 51. The upper flange section 53 is fixed to a lateral wall section 63 of the windshield lower 6 which extends forward from the upper end of the vertical wall section 52 and is described later.

The vertical wall section 52 is a section having larger sizes in the upper-lower direction on both of the left and the right sides than that on the middle side in the vehicle-width direction as shown in Figures 2 and 6. As shown in Figures 5A and 6, both of the left and the right ends of the vertical wall section 52 are positioned behind the damper bases 3 with spaces, and each is fixed to the lateral wall section 42 and the vertical wall section 43 of the damper base support 4. As shown in Figure 6, an air-suction port 52a through which air having flowed in from the outside passes is formed in each of the left and the right sides of the vertical wall section 52. A lower end 52a1 of the air-suction port 52a is positioned above a cover section 75a of a maintenance lid 75 to be described later. As shown in Figure 7, the air-suction port 52a is positioned outside the vertical wall section 43 of the damper base support 4 in the vehicle-width direction.

### <Windshield lower>

As shown in Figure 2, the windshield lower 6 is a steel member long in the left-right direction, is fixed to an upper end of the dash lower 93 partitioning an engine room E and a vehicle compartment R, extends forward from the upper end, and supports the windshield glass W so as to be a cantilever structure. The windshield lower 6 has a flange section 61, a vertical wall section 62, a lateral wall section 63, and an extending section 64. The flange section 61 extends in the front-rear direction, and is fixed to the upper end of the dash lower 93 and the lower flange section 51 of the cross member 5. The vertical wall section 62 extends upward from the front end of the flange section 61. The lateral wall section 63 extends forward from the upper end of the vertical wall section 62, and supports the windshield glass W from under the windshield glass. The extending section 64 extends forward from the front end of the lateral wall section 63, and supports the cowl top 7 so as to be a cantilever structure.

The vertical wall section 62 is a section disposed behind the vertical wall section 52 of the cross member 5 with a space. As shown in Figure 6, a blower-suction port 62a is formed in the right end side of the vertical wall section 62. A blower B to supply air into the vehicle compartment R (refer to Figure 2) is connected to the rear of the blower-suction port 62a.

As shown in Figure 6, each of the left and the right ends of the lateral wall section 63 is positioned above the damper base support 4. The adhesive 94 is added between the front end side of the lateral wall section 63 and the windshield glass W.

As shown in Figure 3, the extending section 64 is a section extending forward more than the front end Wa of the windshield glass W. The extending section 64 is formed of a rear wall portion 64a, a projecting portion 64b, and a front wall portion 64c.

The rear wall portion 64a continues with the front end of the lateral wall section 63, and is a slant portion which linearly inclines so as to be positioned at a lower position as a point on the slant portion goes forward.

The projecting portion 64b is disposed in the intermediate portion of the extending section 64 in the front-rear direction, and is a portion having a rough form of a reverse V and projecting upward. The projecting portion 64b is formed of a rear vertical wall portion 64b1, an upper wall portion 64b2, and a front vertical wall portion 64b3. The rear vertical wall portion 64b1 is a straight portion extending slantingly upward to the front side from the front end of the rear wall portion 64a. The upper wall portion 64b2 is a straight portion extending slantingly downward to the front side from the upper end of the rear vertical wall portion 64b1. The front vertical wall portion 64b3 is a vertical portion extending roughly downward from the front end of the upper wall portion 64b2.

The front wall portion 64c is a horizontal portion extending forward from the front end of the front vertical wall portion 64b3. Holes 64c1 through which engagement clips 71d are inserted are formed through the front wall portion 64c in the upper-lower direction. An opening 95 is formed between the front wall portion 64c and the engine hood EH.

### <Cowl top>

As shown in Figure 3, the cowl top 7 is a member to cover the opening 95 formed between the engine hood EH and the windshield lower 6, and is a resin member to form a so-called cowl box together with the windshield lower 6. The cowl top 7 is formed of two members of an upper one and a lower one of a cowl top upper 72 and a cowl top lower 71.

The cowl top lower 71 is a resin member covering the opening 95 and having a rough form of a crank (like Z) in a vertical sectional view as shown in Figure 3, and is formed of an upper wall section 71a, a side wall section 71b, and a lower wall section 71c.

The upper wall section 71a is a slant section which inclines so as to be positioned at a lower position as a point on the slant section goes forward. And the upper wall section 71a is disposed over the upper wall section 64b2 of the windshield lower 6 with a space.

The side wall section 71b is a roughly vertical section which extends downward from the front end of the upper wall section 71a. And the side wall section 71b is disposed in front of the front vertical wall portion 64b3 of the windshield lower 6 with a space.

The lower wall section 71c is a section which extends forward from the lower end of the side wall section 71b, and then extends slantingly upward to the front side. The rear end side of the lower wall section 71c extends along the front wall portion 64c of the windshield lower 6, and engagement clips 71d are provided on the lower of the rear end side. The cowl top lower 71 is fixed to the windshield lower 6 by engaging the engagement clips 71d in the holes 64c1 formed in the windshield lower 6. And a seal rubber 71e to press against the engine hood EH is equipped on the front end of the lower wall section 71c. Thereby, airtight and watertight sealing between the engine hood EH and the cowl top lower 71 can be kept, so infiltration of water into the engine room E through a space between the engine hood EH and the cowl top lower 71 can be prevented.

As shown in Figure 3, the cowl top upper 72 is a resin member disposed over the cowl top lower 71. And the cowl top upper 72 has a body section 73 and leg sections 74, 74 as shown in Figure 1. Furthermore, air-introducing ports 76, 76 to introduce air from the outside of the vehicle V, and a wiper-shaft hole 77 to be communicated with the wiper-pivot hole 2a of the side member 2 are formed in both of the left and the right sides of the cowl top upper 72.

The body section 73 being a body of the cowl top extends outward in the vehicle-width direction more than each of the left and the right ends of the cowl top lower 71, and is a section having a rough form of a hat in a vertical sectional view as shown in Figures 1 and 3.

And the body section 73 is formed of a rear wall portion 73a, a projecting portion 73b, and a front wall portion 73c as shown in Figure 3.

The rear wall portion 73a is a portion which extends slantingly upward to the front side from the windshield glass W side, and then extends slantingly so as to be positioned at a lower position as a point on the portion goes forward. The rear end of the rear wall portion 73a is positioned so as to abut against the upper surface of the windshield glass W. In this embodiment, the front end Wa side of the windshield glass W is held between the windshield lower 6 and the cowl top upper 72. Note that, the rear wall portion 73a of the cowl top upper 72 may be held to be fixed between the windshield lower 6 and the windshield glass W in order to fix the cowl top upper 72. Furthermore, the rear wall portion 73a of the cowl top upper 72 may be fixed to the rear wall portion 64a of the windshield lower 6 with engagement clips not shown.

The projecting portion 73b is a portion having a rough form of a reverse U which protrudes upward to cover the projecting portion 64b of the windshield lower 6 from the front side, the rear side, and the upper side. And the projecting portion 73b is formed of a rear vertical wall portion 73b1, an upper wall portion 73b2, and a front vertical wall portion 73b3. The rear vertical wall portion 73b1 is a roughly vertical portion which extends upward from the front end of the rear wall portion 73a. The upper wall portion 73b2 is a portion which extends forward from the upper end of the rear vertical wall portion 73b1 to incline so as to be positioned at a lower position as a point on the upper wall portion goes forward, and has a recessed form in a vertical sectional view. The front vertical wall portion 73b3 is a roughly vertical portion which extends downward from the front end of the upper wall portion 73b2.

The rear vertical wall portion 73b1 is disposed behind the rear vertical wall portion 64b1 of the windshield lower 6 with a space. In this embodiment, the second drain section H2 having a rough form of V in a vertical sectional view is formed to extend in the left-right direction by the rear wall portion 73a, the rear vertical wall portion 73b1, and the rear wall portion 64a and the rear vertical wall portion 64b1 of the windshield lower 6. And the second drain section H2 is positioned on the front end Wa side of the windshield glass W. As shown in Figure 6, the second drain section H2 is communicated with the air-liquid-separating chambers 8, 8 on the left and the right sides through communication holes H2a, H2a formed at the left and the right ends of the second drain section, and has a roll to drain water having flowed in from the windshield glass W into the air-liquid-separating chambers 8, 8.

Referring to Figure 3 again, rear openings 73d are formed through the border portion between the rear wall portion 73a and the rear vertical wall portion 73b1 in the upper-lower direction. The rear openings 73d have a roll to lead water to the second drain section H2 from the windshield glass W.

The middle area of the upper wall portion 73b2 is fixed to the upper wall section 71a of the cowl top lower 71 with an adhesive or by welding. The front area of the upper wall portion 73b2 is disposed over the lower wall section 71c with a space, and the front vertical wall portion 73b3 is disposed in front of the side wall section 71b with a space. In this embodiment, the first drain section H1 having a roughly rectangular form in a vertical sectional view is formed by the upper wall portion 73b2, the front vertical wall portion 73b3, and the lower wall section 71c and the side wall section 71b of the cowl top lower 71, and extends in the left-right direction. The first drain section H1 is positioned on the rear end EHa side of the engine hood EH. And as shown in Figure 6, the first drain section H1 is communicated with the air-liquid-separating chambers 8, 8 on the left and the right sides through communication holes H1a, H1a formed at the left and the right ends of the first drain section, and has a roll to drain water having flowed in from the engine hood EH into the air-liquid-separating chambers 8, 8.

Referring to Figure 3 again, front openings 73e are formed through the lower end portion of the front vertical wall portion 73b3 in the front-rear direction. The front openings 73e have a roll to lead water to the first drain section H1 from the engine hood EH.

The front wall portion 73c is a linear portion extending slantingly upward to the front side from the lower end of the front vertical wall portion 73b3. The front wall portion 73c is fixed to the lower wall section 71c of the cowl top lower 71 with an adhesive or by welding. And the front wall portion 73c is disposed just under the rear end EHa of the engine hood EH. Thereby, water falling off the rear end EHa of the engine hood EH is caught and is preferably led to the first drain section H1.

As shown in Figure 1, the leg sections 74 are sections which extend downward from the front ends of the body section 73 on the left and the right end sides, and then extend inward in the vehicle-width direction so as to go around under the cowl top lower 71. And each leg section 74 is supported by the front portion of the upper end of the damper base 3. As shown in Figure 6 , a maintenance opening 74a to communicate the inside and the outside of the air-liquid-separating chamber 8 is formed through each leg section 74 in the front-rear direction. The maintenance opening 74a is positioned at the front portion of the air-liquid-separating chamber 8, and is closed with the maintenance lid 75 made of resin. When maintenance for the damper D needs to be performed, an operator can perform the maintenance after he removes the maintenance lid 75.

The cover section 75a extending in the front-rear direction is formed integrally with the maintenance lid 75 on the rear surface (back surface) of the maintenance lid 75. The cover section 75a is positioned over the upper surface section 31 of the damper base 3, and inclines so as to be positioned at a lower position as a point on the cover section goes rearward. In this embodiment, the upper surface of the cover section 75a is a smooth surface on which water led from the first drain sections H1, H2, and/or the open air (air) and water led through the air-introducing ports 76 flow.

### <Air-liquid-separating chamber>

As shown in Figures 4 and 6, the air-liquid-separating chamber 8 is disposed on each of the left and the right sides of the vehicle V, and is a space to separate water from the open air led through the air-introducing port 76 (refer to Figure 1) and to drain water having flowed in from the first drain sections H1, H2 toward the sides of the vehicle. Furthermore, as shown in Figures 6 and 7, the air-liquid-separating chamber 8 is formed to be surrounded by the side member 2, the upper surface section 31 of the damper base 3, the lateral wall section 42 and the vertical wall section 43 of the damper base support 4, the vertical wall section 52 of the cross member 5, the windshield lower 6, the body section 73 and the leg section 74 of the cowl top upper 72.

The structure 100 for the front part of the vehicle according to the embodiment of the present invention is basically constituted as described in the above. Next, the operation and effect of the structure will be described appropriately with reference to Figures 1 to 8.

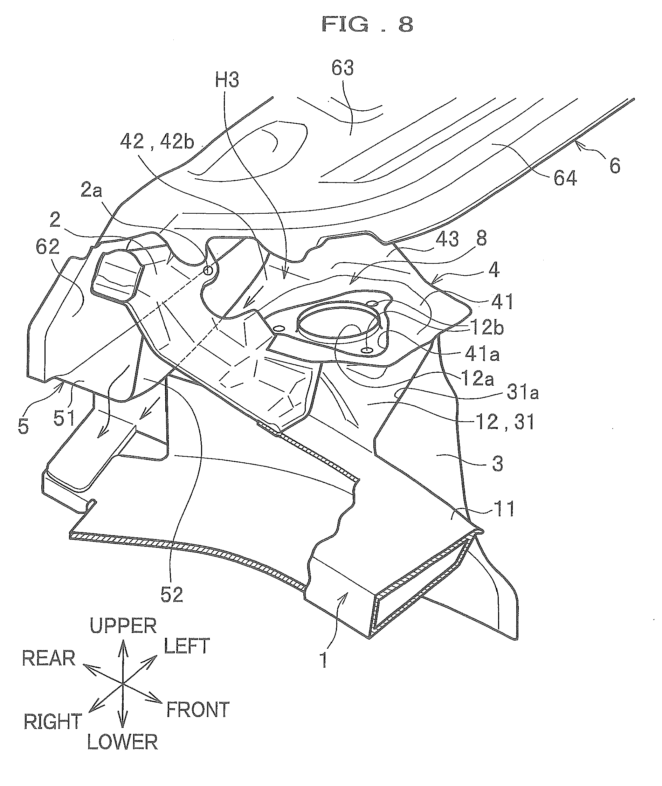

Note that, arrows with solid lines in Figures 6 and 8 show flows of water, and arrows with dotted lines in Figure 6 show flows of air.

As shown in Figure 3, water having flowed in through the space between the rear end EHa of the engine hood EH and the front vertical wall portion 73b3 of the cowl top upper 72 is led to the first drain section H1 through the front wall portion 73c and the front openings 73e. As to examples of water mentioned above, water at the time of car washing, rainwater, and the like are raised.

On the other hand, water having flowed along the windshield glass W is led to the second drain section H2 through the rear wall portion 73a and the rear openings 73d.

And, as shown in Figure 6, the water led to the first drain sections H1, H2 flows toward the sides of the vehicle, and then, is led into the air-liquid-separating chambers 8 through the communication holes H1a, H2a.

And then, after the water led into the air-liquid-separating chamber 8 falls onto the upper surface of the cover section 75a of the maintenance lid 75, the water flows along the cover section 75a toward the third drain section H3.

And then, as shown in Figure 8, the water led to the third drain section H3 flows along the bottom wall section 42b toward the sides of the vehicle, and then, is drained to the sides (insides of fenders not shown) of the vehicle through the notched portion 15a (refer to Figure 4) of the side extension 15.

Note that, air led into the air-liquid-separating chambers 8 through the air-introducing ports 76, 76 (refer to Figure 1) on both of the left and the right sides of the cowl top 7, is taken into the blower B through the air-suction port 52a, the closed cross section K, and the blower-suction port 62a. And then, the air is taken in the vehicle compartment R through the blower B.

On the other hand, water having flowed into the air-liquid-separating chambers 8 through the air-introducing ports 76, 76, and the wiper-shaft hole 77 (refer to Figure 1) flows toward the third drain section H3 along the cover section 75a of the maintenance lid 75.

And the water led to the third drain section H3 flows along the bottom wall section 42b toward the sides of the vehicle, and then, is drained to the sides of the vehicle through the notched portion 15a (refer to Figure 4) of the side extension 15.

At this time, in this embodiment, the lower end 52a1 of the air-suction port 52a of the cross member 5 is positioned above the upper surface of the cover section 75a, which upper surface is a smooth surface along which air flows, so that water having a larger mass than air easily hits against the vertical wall section 52 of the cross member 5, and separating of water from air can be efficiently realized.

Furthermore, the blower-suction port 62a is provided at a position where it does not overlap with the air-suction port 52a when they are viewed in the front-rear direction. So water hits against a portion of the vertical wall section 62 of the windshield lower 6 higher than the blower-suction port 62a even when the water passes through the air-suction port 52a. And water having flowed in the closed cross section K is drained to the sides of the vehicle flowing along the lower flange section 51 of the cross member 5.

According to the embodiment described above, air and water having flowed in from the outside of the vehicle V can be separated from each other with use of the pair of air-liquid-separating chambers 8, 8 disposed on both sides of the vehicle in the vehicle-width direction, and water having flowed to the cowl top 7 from the engine hood EH is drained to the sides of the vehicle through the first drain section H1 positioned on the rear end EHa side of the engine hood EH and extending in the vehicle-width direction, so that water can be restrained from staying on the cowl top 7. Therefore, it is not needed to establish a space having a large cross section, which space is positioned on the middle side in the vehicle-width direction, and has a function for separating water from air and also a function for draining water, so that a dash upper having a large sectional size can be omitted. Hereby, a space can be secured above the engine, where the windshield lower 6, the cowl top 7, the windshield glass W, and the engine hood EH can be lowered, so that a field of a forward view in the vehicle can be enlarged. Furthermore, since a height of the vehicle V can be lowered by lowering the windshield lower 6, the cowl top 7, the windshield glass W, and the engine hood EH, a projected area of the vehicle V toward the front can be reduced, so that the fuel economy can be improved.

In general, when water having flowed to the cowl top 7 from the shield glass W stays there, the water is scraped out by a wiper, so that the scraped water is re-attached onto the windshield glass W. Therefore, the forward visibility in the vehicle turns worse.

According to the embodiment, the second drain section H2 extending in the vehicle-width direction is provided between the projecting portion 73b of the windshield lower 6 and the cowl top 7, and is positioned on the front end Wa side of the windshield glass W. Hereby, water having flowed to the cowl top 7 from the windshield glass W can be drained to the sides of the vehicle, so that water can be restrained from staying on the cowl top 7. Thus the re-attachment of water onto the windshield glass W can be prevented, so that the forward visibility in the vehicle can be properly secured.

Furthermore, according to the embodiment, the maintenance lid 75 to close the maintenance opening 74a has the cover section 75a. Since the cover section 75a covers the upper surface section 31 of the damper base 3, water can be restrained from staying on the upper surface section 31 of the damper base 3 and on the damper D, and dust, dirt, and/or the like flowed in along with water can be also restrained from staying there.

In particular, in the embodiment, the cover section 75a inclines so as to be positioned at a lower position as a point on the cover section goes toward the third drain section H3. Hereby, water to flow along the cover section 75a is easily led to the third drain section H3 thanks to its weight, so that the rapid draining can be realized.

Furthermore, according to the embodiment, the cover section 75a is integrated with the maintenance lid 75. Therefore, at the same time when the maintenance lid 75 is removed from the maintenance opening 74a, the cover section 75a is exposed to the outside of the air-liquid-separating chamber 8, so that dust, dirt, and/or the like adhered onto the cover section 75a can be easily removed.

Furthermore, since the cover section 75a is integrated with the maintenance lid 75, the number of parts, cost, and assembly man-hour can be reduced, compared to the case where another member to cover the upper surface section 31 of the damper base 3 is prepared.

Furthermore, according to the embodiment, since the flexible seal member 46 is disposed between the vertical wall section 43 and the windshield lower 6, which section 43 forms an inside surface of the air-liquid-separating chamber 8 in the vehicle-width direction, the seal member 46 has both of a heat-insulating function and a shock-absorbing function, the former function is a function for insulating a heat transfer to the air-liquid-separating chamber 8 from the engine room E, and the latter function is a function for absorbing a shock from the above part.

The embodiment of the present invention has been described above in detail with reference to the drawings, but the present invention is not limited to that embodiment, and may be properly modified without departing from the purpose of the present invention.

The windshield lower 6 and the like are made of steel which are components of the structure 100 for the front part of the vehicle of the embodiment. But the present invention is not limited to that, and they may be formed by stamping another metallic plate like an aluminum plate.

In the embodiment, the cover section 75a is integrated with the rear surface of the maintenance lid 75. But the present invention is not limited to that, the cover section 75a may be formed separately from the maintenance lid 75 to be fixed to the rear surface of the maintenance lid 75.

In the embodiment, air and water flow on the upper surface of the cover section 75a of the maintenance lid 75. But the present invention is not limited to that, a constitution may be adopted, which constitution is such that the cover section 75a is omitted, and air and water flow on the upper surface section 31 of the damper base 3 and the upper surface of the fixing section 41 of the damper base support 4. In this case, it is preferable that a surface treatment like a coating or a plating on the damper base 3, the damper base support 4, and the damper D is done.

### DESCRIPTION OF THE SYMBOLS

- 100: Structure for front part of vehicle
- 1: Upper member
- 12: Fixing section
- 3: Damper base
- 31: Upper surface section
- 4: Damper base support
- 43: Vertical wall section
- 46: Seal member
- 5: Cross member
- 6: Windshield lower
- 64: Extending section
- 64b: Projecting portion
- 7: Cowl top
- 71: Cowl top lower
- 72: Cowl top upper
- 73: Body section (Body of cowl top)
- 74: Leg section
- 74a: Maintenance opening
- 75: Maintenance lid
- 75a: Cover section
- 8: Air-liquid-separating chamber
- 95: Opening
- H1: First drain section
- H1a: Communication hole
- H2: Second drain section
- H2a: Communication hole
- H3: Third drain section
- V: Vehicle
- R: Vehicle compartment
- E: Engine room
- EH: Engine hood
- EHa: Rear end
- W: Windshield glass
- Wa: Front end
- D: Damper

## Claims

1. A structure for a front part of a vehicle, comprising:
a pair of air-liquid-separating chambers disposed on both sides in a vehicle-width direction, and to separate air from water having flowed in from the outside of the vehicle;
a windshield lower to support a windshield glass from under the windshield glass, and having an extending section extending forward more than a front end of the windshield glass; and
a cowl top supported by the extending section, and to cover an opening formed between the extending section and an engine hood,
wherein the cowl top is provided with a first drain section positioned on a rear end side of the engine hood, extending in the vehicle-width direction, and to drain water having flowed to the cowl top from the engine hood to the sides of the vehicle.

2. The structure for the front part of the vehicle according to claim 1,
wherein the windshield lower further has a protruding section provided on an intermediate portion of the extending section in a front-rear direction, and protruding upward,
wherein a second drain section is provided between the protruding section of the windshield lower and the cowl top, the second drain section being positioned on the front end side of the windshield glass, and extending in the vehicle-width direction to drain water having flowed to the cowl top from the windshield glass toward the sides of the vehicle.

3. The structure for the front part of the vehicle according to claim 2,
wherein both side end portions of the second drain section and the first drain section in the vehicle-width direction communicate with the pair of air-liquid-separating chambers,
wherein the structure for the front part of the vehicle further comprises a pair of damper bases and a cross member, the pair of damper bases being disposed on the both sides in the vehicle-width direction to support dampers, and having upper surface sections to form bottom surfaces of the air-liquid-separating chambers; the cross member extending in the vehicle-width direction, and being disposed behind the damper bases with spaces,
wherein a third drain section to drain water toward the sides of the vehicle is provided between the damper bases and the cross member, and
wherein the upper surface sections incline so as to be positioned at lower positions as the upper surface sections approach the third drain section.

4. The structure for the front part of the vehicle according to claim 3,
wherein the cowl top has
a cowl top body extending in the vehicle-width direction, and being disposed above the damper bases with spaces to form upper surfaces of the air-liquid-separating chambers;
leg sections extending downward from ends of the cowl top body in the vehicle-width direction, and being supported by front ends of the damper bases; and
maintenance openings formed in the leg sections, and to communicate the insides and the outsides of the air-liquid-separating chambers,
wherein maintenance lids to close the maintenance openings are detachably attached to the cowl top, and
wherein the maintenance lids have cover sections to cover the upper surface sections.

5. The structure for the front part of the vehicle according to claim 3 or claim 4, further comprising damper base supports connecting the cross member and the damper bases,
wherein the damper base supports have vertical wall sections positioned under the windshield lower, and extending in an upper-lower direction to form inside surfaces of the air-liquid-separating chambers in the vehicle-width direction, and
wherein flexible seal members are disposed between the vertical wall sections and the windshield lower.

## Amended claims

### Amended claims under Art. 19.1 PCT

**1.** (amended) A structure for a front part of a vehicle, comprising:
a pair of air-liquid-separating chambers disposed on both sides in a vehicle-width direction, and to separate air from water having flowed in from the outside of the vehicle;
a windshield lower to support a windshield glass from under the windshield glass, and having an extending section extending forward more than a front end of the windshield glass; and
a cowl top supported by the extending section, and to cover an opening formed between the extending section and an engine hood,
wherein the windshield lower further has a protruding section provided at the extending section, and protruding upward,
wherein a second drain section is provided between the protruding section of the windshield lower and the cowl top, the second drain section being positioned on the front end side of the windshield glass, and extending in the vehicle-width direction to drain water having flowed to the cowl top from the windshield glass to the air-liquid-separating chambers,
wherein both side end portions of the second drain section in the vehicle-width direction communicate with the air-liquid-separating chambers, and
wherein the air-liquid-separating chambers are chambers to drain water having flowed in along the second drain section to the sides of the vehicle.

**2.** (amended) The structure for the front part of the vehicle according to claim 1,
wherein the cowl top is provided with a first drain section positioned on a rear end side of the engine hood, extending in the vehicle-width direction, and to drain water having flowed to the cowl top from the engine hood to the air-liquid-separating chambers,
wherein the first drain section is positioned in front of the second drain section,
wherein both side end portions of the first drain section in the vehicle-width direction communicate with the air-liquid-separating chambers, and
wherein the air-liquid-separating chambers are chambers to drain water having flowed in along the first drain section toward the sides of the vehicle.

**3.** (amended) The structure for the front part of the vehicle according to claim 2, further comprising a pair of damper bases and a cross member, the pair of damper bases being disposed on the both sides in the vehicle-width direction to support dampers, and having upper surface sections to form bottom surfaces of the air-liquid-separating chambers; the cross member extending in the vehicle-width direction, and being disposed behind the damper bases with spaces,
wherein a third drain section to drain water toward the sides of the vehicle is provided between the damper bases and the cross member, and
wherein the upper surface sections incline so as to be positioned at lower positions as the upper surface sections approach the third drain section.

**4.** The structure for the front part of the vehicle according to claim 3,
wherein the cowl top has
a cowl top body extending in the vehicle-width direction, and being disposed above the damper bases with spaces to form upper surfaces of the air-liquid-separating chambers;
leg sections extending downward from ends of the cowl top body in the vehicle-width direction, and being supported by front ends of the damper bases; and
maintenance openings formed in the leg sections, and to communicate the insides and the outsides of the air-liquid-separating chambers,
wherein maintenance lids to close the maintenance openings are detachably attached to the cowl top, and
wherein the maintenance lids have cover sections to cover the upper surface sections.

**5.** The structure for the front part of the vehicle according to claim 3 or claim 4, further comprising damper base supports connecting the cross member and the damper bases,
wherein the damper base supports have vertical wall sections positioned under the windshield lower, and extending in an upper-lower direction to form inside surfaces of the air-liquid-separating chambers in the vehicle-width direction, and
wherein flexible seal members are disposed between the vertical wall sections and the windshield lower.
